Europäisches Patentamt

European Patent Office

Office européen des brevets

(11) Publication number: **0 222 492**
A2

(12) # EUROPEAN PATENT APPLICATION

(21) Application number: **86307589.1**

(22) Date of filing: **02.10.86**

(51) Int. Cl.⁴: **D 01 F 9/12**
**C 30 B 25/00**

(30) Priority: **31.10.85 US 793557**

(43) Date of publication of application:
**20.05.87 Bulletin 87/21**

(84) Designated Contracting States:
**DE ES FR GB IT**

(71) Applicant: **GENERAL MOTORS CORPORATION**
**General Motors Building 3044 West Grand Boulevard**
**Detroit Michigan 48202(US)**

(72) Inventor: **Tibbetts, Gary George**
**1177 Chesterfield**
**Birmingham Michigan 48009(US)**

(74) Representative: **Haines, Arthur Donald et al,**
**Patent Section (F6) Vauxhall Motors Limited P.O. Box 3**
**Kimpton Road**
**Luton, Beds. LU2 0SY(GB)**

(54) **Pressure pulse stimulation of graphite fibre growth.**

(57) In a preferred methane pyrolysis process for growing graphite fibres by pyrolysis of a natural gas stream in the presence of submicrometre iron nuclei, the gas is subjected to a transient pressure increase during an early stage of pyrolysis to stimulate the nuclei to form a higher proportion of the filaments that are the precursors for the fibres.

EP 0 222 492 A2

# PRESSURE PULSE STIMULATION OF GRAPHITE FIBRE GROWTH

## Background of the Invention

This invention relates to the manufacture of graphite fibres by pyrolysis of a hydrocarbon gas, preferably methane, in the presence of iron nuclei.

US-A-4,391,787 describes a method for manufacturing thin, straight graphite fibres by natural gas pyrolysis carried out within a thin-wall stainless steel tube surrounded by wet hydrogen gas. The fibres are preferably 5 to 15 micrometres in diameter and up to several centimetres long and are well suited for plastics filler. In this process, fibre growth is attributed to a complex interaction between the chromium-bearing steel and methane at elevated temperature. European patent application No.0 132 909A describes a method for growing the fibres on a ceramic surface, but only after natural gas pyrolysis is initiated adjacent stainless steel. Stainless steel is relatively expensive and has a limited useful life at fibre-growing temperatures. Furthermore, unavoidable carburization of the stainless steel unproductively removes carbon and reduces yield.

US-A-4 565 684 describes a process for growing graphite fibres by methane pyrolysis in the presence of submicrometre iron nuclei. The fibres are preferably grown by passing a gas stream containing methane through a tubular ceramic reactor heated at a temperature sufficient to decompose the methane. The nuclei are distributed upon a ceramic growing surface exposed to the gas stream within the reactor. It has been found that fibre growth occurs in two stages. Initially, the nuclei interact with nascent carbon derived from the methane to form microscopic carbon filaments that grow lengthwise. During this stage, a preferred gas is a hydrogen mixture comprising dilute natural gas. During a second stage, a more concentrated methane gas stream is employed to thicken the filaments into fibres.

In this process, the spent gas is exhausted into the atmosphere. Only a very slight overpressure, typically less than 0.01 atmosphere, is required to create a suitable slow gas flow through the reactor. Thus, the gas phase is characterized as being at substantially atmospheric pressure.

The product fibres are preferably between about 5 and 100 micrometres in diameter and up to several centimetres in length and are suitable for filler in synthetic plastic composites. Each fibre is derived from a microscopic filament, which in turn is derived from a submicrometre iron particle. Although the process produces a high yield of fibres per area of growing surface, it is believed only a small portion of the iron particles nucleate filaments. It is desired to increase the proportion of iron particles that form filaments, so as to increase the yield of graphite fibres.

Therefore, it is an object of this invention to provide an improved process for manufacturing carbon filaments by pyrolysis of a gaseous hydrocarbon compound, preferably methane, in the presence of submicrometre iron particles, which process includes a minor, transient adjustment of reaction conditions during the early period of pyrolysis to increase the proportion of particles that nucleate filaments and thus increase the number of filaments formed.

More particularly, it is an object of this invention to provide an improvement in the described pyrolysis process for forming graphite fibres from natural gas, which process includes a pressure pulse applied to the gas phase in the presence of submicrometre iron nuclei during the initial filament-forming stage to stimulate nuclei to form filaments and thereby increase the yield of product fibres.

## Summary of the Invention

In accordance with a preferred embodiment of this invention, the formation of microscopic carbon filaments by methane pyrolysis in the presence of iron nuclei is stimulated by a pressure pulse in the gas phase. The nuclei are dispersed on a refractory growing surface and exposed to a methane-containing gas stream at substantially atmospheric pressure. A preferred gas stream is formed of natural gas diluted by hydrogen and comprises a methane concentration between about 5 and 15 volume percent. The gas stream is heated in contact with the nuclei-populated surface at a temperature sufficient to decompose methane and to cause nascent carbon to interact with the nuclei to form carbon filaments. In accordance with this invention, filament formation by the iron nuclei is stimulated by a transient pressure adjustment to the gas. At an early time during the filament-forming stage, the gas flow over the nuclei-bearing surface is interrupted, and the gas pressure is increased by between about 0.04 and 0.12 atmosphere. The pressure is then released to rapidly return the gas to substantially atmospheric pressure. The flow of dilute methane gas is resumed and continued for a time sufficient to grow the filaments to maximum length. Thereafter, the natural gas content in the gas stream is increased to radially enlarge the filaments to form fibres having diameters between 5 and 100 micrometres, preferably between 5 and 15 micrometres.

While the reactions that form the filaments are not fully understood, it is believed that they are driven by a high carbon potential in the gas phase and involve dissolution of pyrolytic carbon into the iron nuclei and concurrent precipitation of carbon from the nuclei. However, precipitation may occur in forms that do not produce a suitable filament. It is estimated that one in $10^{11}$ iron particles produces a filament of macroscopic length. When the pressure of the predominantly hydrogen gas is increased in accordance with this invention, methane decomposition, which produces hydrogen byproduct, is believed suppressed. This decreases the carbon potential of the gas and thus reduces the rate at which carbon dissolves in a particle, which in turn reduces the rate of precipitation. Thereafter, when the pressure is lowered, the carbon potential in the system rapidly increases, whereupon precipitation is encouraged. This stimulates iron particles that have not formed filaments to do so.

In any event, it is found that the pressure pulse applied in accordance with this invention, increases the number of filaments formed per unit area on comparably nucleated growing surfaces. This increase in the number of filaments results in a higher yield of product fibres per unit area. This increase in yield is accomplished relatively conveniently and without prolonging or significantly disturbing the overall process.

## Detailed Description of the Invention

The method of this invention is illustrated by the following example.

Graphite fibres were grown within a cylindrical tubular quartz reactor having a gas inlet at one end and a gas outlet at the opposite end. A 30 centimetre long midsection of the reactor was enclosed within a coaxial cylindrical furnace, encircled by a helical electrical resistance heating element. The reactor ends extended beyond the furnace for making gas line connections. The reactor inner diameter was about 22 millimetres. The reactor inlet was connected to pressurized gas bottles containing argon, hydrogen and natural gas through a series of gas supply lines equipped with flow regulators. In this example, the natural gas was composed of, by volume, 2.2 percent ethane, 1.1 percent nitrogen and the balance substantially methane. The reactor outlet was connected to an exhaust line through which spent gases were emitted into the atmosphere. The exhaust line was equipped with a valve for controlling gas flow.

Graphite fibres were grown on an alumina coupon having a roughened growing surface adapted to be exposed to gas within the reactor. The coupon surface was pretreated by applying 0.05 M aqueous solution of ferric nitrate, $Fe(NO_3)_3$, and drying the coupon to deposit thereon an iron salt residue.

To grow the fibres, the reactor was heated to $1050^{\circ}C$ while flowing argon through the reactor. After air had been purged from the reactor by the argon, the coupon was inserted into the midsection from a chamber adjacent the reactor outlet. After the desired temperature was achieved, argon flow was terminated. A gaseous mixture comprising about 11 volume percent methane and the balance hydrogen was then passed through the reactor at a rate of about 40 cubic centimetres per minute.

In accordance with this invention, after the methane gas flow had substantially replaced argon within the reactor, the gas within the reactor was subjected to a pressure pulse. A first pulse was applied ten minutes after commencement of methane gas flow. The valve in the exhaust line was closed, without adjusting the regulators in the lines supplying gas from the bottled sources, whereupon the pressure of the gas within the reactor increased at a rate of about 0.1 atmosphere per minute. The pressure change was monitored by a manometer operatively connected near the reactor inlet. After the pressure of the gas within the reactor had increased by about 0.08 atmosphere, which occurred less than a minute after the exhaust valve was closed, the exhaust valve was re-opened. Upon re-opening the valve, the pressure of the gas stream rapidly returned to its original value. A second pressure pulse was similarly applied approximately ten minutes after the first.

The flow of 11% methane gas was maintained for a total time of approximately 30 minutes, during which the two pressure pulses were applied. Thereafter, hydrogen flow from the bottled gas source was discontinued. The methane gas flow rate was increased to approximately 40 cc/min. This methane gas flow was continued for approximately 15 minutes, after which the flow of methane was discontinued. After cooling the reactor to room temperature, the coupon was removed and examined. Numerous graphite fibres were have found to have grown on the pretreated surface.

The graphite fibres were considered to be equivalent to those produced by the process described in US-A-4 565 684, incorporated herein by reference, but without pressure pulse stimulation in accordance with this invention. For comparison, the described fibre-growing process was repeated, but without interrupting gas flow by closing the exhaust gas valve. It was found that the number of fibres per unit growing surface increased by about two-thirds using pressure pulse stimulation in accordance with this invention.

In the described embodiment, methane pyrolysis is carried out in two stages to produce the desired graphite fibres. The growing surface initially bears an iron salt deposit formed upon drying of the ferric nitrate solution. Upon heating in the presence of predominantly hydrogen gas, the deposit is reduced to form minute iron particles less than a micrometre in diameter. These particles are believed to interact with pyrolytic carbon derived from methane in the gas stream to grow filaments. Once nucleated, the filaments lengthen at a very rapid rate. However, this lengthening ceases after only a short time for reasons that are not fully understood. It is believed that filament formation is substantially completed within a few minutes of nucleation, although the first step is preferably extended to assure maximum opportunity for filament growth. The resultant filaments are substantially the length of the product fibres, but have sub-micrometre diameters. In a preferred second stage, undiluted natural gas is passed through the reactor to thicken the filaments into product fibres.

In accordance with this invention, a pressure pulse stimulates the iron particles to increase the proportion that form filaments, and thereby increase the yield of product fibres. The gas stream exhausted into the ambient atmosphere is considered at substantially ambient pressure. By substantially ambient pressure, it is meant that the gas stream comprises only a small pressure gradient necessary to induce the desired flow through the reactor, typically less than 0.01 atmosphere. When the exhaust gas line is closed, the pressurized gases within the connected gas bottles gradually exert increased pressure upon the gas within the reactor. In the process of the described embodiment, a pressure increase between about 0.04 and 0.12 atmosphere is preferred to significantly increase fibre yield, with a maximum yield being obtained using a 0.08 atmosphere pulse. In comparison to the similar process carried out without pulse stimulation, a pulse greater than 0.17 atmosphere does not significantly increase fibre yield, while a pulse greater than 0.3 atmosphere may reduce fibre growth by about two-thirds. Although not fully understood, this reduction in fibre growth may be due to a competing mechanism that prematurely terminates filament growth by particles that are suitable for nucleating filaments.

In the described embodiment, two pulses were applied at ten minute intervals during the filament-forming stage. The increased fibre yield is mainly attributed to the first pulse. Slight additional stimulation is believed to be produced by the second pulse applied 20 minutes after commencement of methane flow. In a second example, carbon fibres were grown by a process similar to the described embodiment, but carried out within a 19 millimetre inner diameter ceramic tube on a coupon seeded with commercially available iron particles having an average diameter of about 12 nanometres. In a series of experiments, a pressure pulse of 0.105 atmosphere was applied at various times after commencement of dilute methane gas flow. It was found that maximum stimulation occurred when the pulse was applied after a period of about 12 to 14 minutes. A pulse applied after about 15 minutes was found to significantly reduce fibre growth, apparently by prematurely terminating filament formation. A pulse applied after about 20 minutes increased fibre yield, but this increase was significantly less than for a pulse applied after 12 to 14 minutes.

Graphite fibres are preferably grown from natural gas that is relatively inexpensive and contains contaminants that may improve fibre growth. However, a pressure pulse in accordance with this invention may be suitably applied to stimulate iron nuclei to grow graphite fibres from vaporous hydrocarbon compounds other than natural gas or methane, including benzene and polycyclic aromatic compounds. Although this invention is preferably carried out using iron nuclei formed in-situ by reduction of ferric nitrate deposit, other sources of submicrometre iron particles may be suitable. Iron particles having diameters less than 0.1 micrometres are preferred.

0222492

Claims:

1. A pyrolysis process for forming carbon fibres which includes a process for forming carbon filaments which comprises heating a gas containing a hydrocarbon compound in the presence of suitable submicrometre iron nuclei distributed on a refractory surface, said process being carried out at a first pressure that is substantially atmospheric pressure and at a temperature sufficient to decompose the hydrocarbon compound, so that a proportion of said nuclei interact with nascent carbon to nucleate formation of the carbon filaments, characterised in that the pressure of the gas in contact with the nuclei is increased by an amount up to about 0.17 atmosphere above said first pressure to decrease carbon dissolution in the metallic nuclei and thereafter is rapidly decreased to return said gas to said first pressure to increase carbon dissolution in the metallic nuclei, so as to increase the proportion of said nuclei that nucleate the formation of said carbon filaments.

2. A pyrolysis process for forming carbon fibres according to Claim 1, in which methane gas at said first substantially atmospheric pressure is heated in the presence of said submicrometre iron nuclei distributed on a suitable ceramic surface at a temperature sufficient to decompose the methane and to grow said filaments, characterised in that the pressure of the gas in contact with the nuclei is increased to between about 0.04 and 0.12 atmosphere above said first pressure, and thereafter rapidly decreased.

3. A methane pyrolysis process for producing graphite fibres according to Claim 2, in which a gas containing natural gas is flowed over a surface having distributed thereon said iron nuclei, said gas being composed, during an initial stage, of a mixture of hydrogen and natural gas in a proportion sufficient to produce a methane concentration between about 5 and 15 volume percent and effective to form said filaments at said methane decomposition temperature, the methane concentration thereafter being increased to thicken the filaments into fibres between 5 and 15 micrometres in diameter and up to several centimetres in length, characterised in that the gas flow over the surface during the filament-forming stage is interrupted whilst the pressure of the gas in contact with the surface is concurrently increased and then is resumed when the gas pressure is rapidly decreased.